# FASCICULE DE BREVET EUROPEEN

(11) **EP 2 589 131 B1**
(45) Date de publication et mention de la délivrance du brevet: **18.12.2019**
(21) Numéro de dépôt: 11735464.7
(22) Date de dépôt: 09.06.2011
(51) Int. Cl.: H02J 7/14, B60R 16/03

(54) **ALIMENTATION D'UN RESEAU DE BORD D'UN VEHICULE AUTOMOBILE**
STROMVERSORGUNG FÜR EIN BORDEIGENES STROMNETZ EINES KRAFTFAHRZEUGS
POWER SUPPLY FOR AN ON-BOARD ELECTRICAL NETWORK OF AN AUTOMOTIVE VEHICLE

(30) Priorité: 01.07.2010 FR 1055299
(43) Date de publication de la demande: 08.05.2013
(73) Titulaire: Renault s.a.s., 92100 Boulogne-Billancourt (FR)
(72) Inventeur: SAINT-LEGER, Gérard, F-78000 Versailles (FR); AMEZIANI, Ménouar, F-78280 Guyancourt (FR)
(86) Numéro de dépôt international: PCT/FR2011/051308
(87) Numéro de publication internationale: WO 2012/001256

(56) Documents cités:
- EP-A1- 1 914 869
- DE-A1-102006 043 907
- GB-A- 2 395 375
- US-A- 4 564 799
- US-A- 5 162 720

## Description

L'invention concerne l'alimentation en électricité d'un réseau de bord d'un véhicule, en particulier un véhicule automobile dont la chaine de propulsion est alimentée en carburant fossile.

Le réseau de bord d'un véhicule comprend un certain nombre de postes consommateurs d'électricité, par exemple un dispositif d'allumage du moteur, les réflecteurs, les voyants lumineux du tableau de bord, une autoradio, un système de type GPS (de l'anglais « Global positioning system ») et/ou autres.

Les véhicules automobiles courants comportent un alternateur pour obtenir de l'énergie électrique à partir d'énergie mécanique, cette énergie mécanique étant elle-même obtenue suite à la combustion de carburant. L'énergie électrique fournie par l'alternateur permet d'alimenter le réseau de bord du véhicule.

Le réseau de bord du véhicule constitue ainsi un poste consommateur de carburant.

Il existe un besoin pour un véhicule plus écologique.

Le document GB2395375 décrit un réseau de bord pour véhicule permettant d'isoler la partie du réseau de bord connectée aux dispositifs de sécurité du véhicule, et d'autres consommateurs de loisir dès lors qu'un mouvement du véhicule est détecté. Des batteries auxiliaires sont utilisées pour alimenter ces autres consommateurs lorsque le véhicule est à l'arrêt, et sont alimentées par l'alternateur du véhicule.

Le document DE 102006043907 décrit un générateur thermique utilisant la chaleur des gaz d'échappement dans un véhicule, et permettant de recharger des consommateurs du véhicule via une batterie rechargeable et des convertisseurs appropriés.

Il est proposé un dispositif auxiliaire d'alimentation selon la revendication 1.

Les moyens de stockage principaux peuvent par exemple comprendre une batterie, dite batterie principale, un condensateur, ou autre.

Les moyens de stockage auxiliaires peuvent par exemple comprendre une batterie, dite batterie auxiliaire, un condensateur, ou autre.

Ainsi, la batterie auxiliaire, chargée par une source alternative vient-elle remplacer au moins partiellement l'alternateur, permettant ainsi d'éviter de consommer du carburant à des fins de conversion en énergie électrique.

Ce dispositif auxiliaire peut être installé sur un véhicule automobile existant. On peut donc prévoir de proposer à la vente ce dispositif auxiliaire, lequel peut permettre à des utilisateurs de véhicules automobiles courants de réaliser des économies de carburant.

La batterie auxiliaire peut par exemple être une batterie Lithium-Ion, une batterie lithium-polymère, ou autre.

Le moyen de charge de la batterie auxiliaire peut par exemple comprendre une prise de raccordement au secteur, un ou plusieurs panneau(x) solaire(s), un thermo-générateur, un chargeur, un relais, un convertisseur, un BMS (de l'anglais « Battery Management System »), et/ou autre.

Le moyen de commande peut par exemple comprendre des moyens de traitement numériques, par exemple un microcontrôleur, ou bien encore être réalisé en électronique discrète.

Avantageusement, un convertisseur permet, lors du transfert d'énergie électrique, adapter l'énergie électrique reçue de la batterie auxiliaire aux caractéristiques du réseau de bord. Ainsi, le réseau de bord reçoit-il de l'énergie électrique à un format adapté, et ce sans modification du dispositif principal.

Bien entendu, l'invention n'est en rien limitée par cette caractéristique, et on pourrait prévoir un agencement différent du système d'alimentation. Par exemple, on pourrait prévoir lors du transfert d'énergie à partir de la batterie auxiliaire de piloter l'alternateur du dispositif principal et d'imposer à la batterie auxiliaire une tension de sortie élevée. Il faudra néanmoins prévoir un réseau de bord avec des postes consommateurs d'électricité relativement robustes.

Avantageusement, le moyen de détection du fonctionnement de l'alternateur est agencé de façon à détecter ùn transfert de charges à partir de l'alternateur, notamment entre l'alternateur et la batterie principale. Le fonctionnement de l'alternateur peut ainsi être détecté de façon relativement simple.

Avantageusement, le moyen de détection du fonctionnement de l'alternateur comprend un capteur de courant pour mesurer le courant émis à partir de l'alternateur, notamment le courant entre l'alternateur et la batterie principale. Du fait de la mesure de courant, la détection peut être relativement précise.

Avantageusement, le dispositif auxiliaire peut être agencé pour asservir une valeur de commande du transfert d'énergie électrique en fonction de l'écart entre une valeur de courant mesurée reçue du capteur de courant et une valeur de consigne, et ce selon une boucle de régulation.

Ainsi, on régule le transfert d'énergie à partir de la batterie auxiliaire en fonction du courant mesuré en sortie de l'alternateur. Lorsque la demande en énergie du réseau de bord varie, on peut ainsi adapter le transfert de façon à maintenir ce courant à la valeur de consigne.

Une boucle de régulation peut ainsi être mise en place, permettant ainsi de garantir une consommation de carburant limitée.

La valeur de consigne de courant peut par exemple être égale à 0 Ampère, ou bien à une valeur relativement faible.

Si l'énergie électrique apportée par la batterie auxiliaire est insuffisante par rapport à la consommation du réseau de bord, l'alternateur délivre alors le complément d'énergie nécessaire. La valeur de courant mesurée en sortie de l'alternateur augmente en conséquence. Si par la suite la consommation du réseau de bord diminue, alors le fonctionnement en boucle fermée peut reprendre, et la valeur de courant en sortie de l'alternateur atteint à nouveau la valeur de consigne.

Le moyen de détection du fonctionnement de l'alternateur n'est en rien limité à un capteur de courant.

On peut par exemple prévoir un relevé du taux de charge de l'alternateur. En effet, l'alternateur est chargé lorsqu'il fournit de l'énergie électrique.

Selon un autre exemple, le dispositif auxiliaire peut être agencé de façon à détecter si la tension du réseau de bord dépasse un seuil. Ce seuil peut par exemple être égal à 14 volts. Un tel dépassement, par exemple une tension entre 14 V et 14,5 V, peut en effet indiquer que l'alternateur est en train de fournir de l'énergie.

En outre, on peut prévoir une boucle de régulation pour asservir une valeur de commande du transfert d'énergie à partir de la batterie auxiliaire, en fonction d'un autre paramètre que la valeur de courant en sortie d'alternateur.

Avantageusement et de façon non limitative, le dispositif auxiliaire peut être agencé de façon à charger la batterie auxiliaire à partir de l'alternateur. En effet, il peut être intéressant de récupérer l'énergie fournie par l'alternateur lorsque celle-ci ne correspond pas à une consommation de carburant dédiée. Par exemple, lorsque le véhicule est freiné, l'alternateur peut produire de l'énergie comme cela se fait couramment dans les véhicules hybrides. Cette énergie produite et correspondant à un moindre coût en carburant peut être transférée vers la batterie auxiliaire, laquelle peut être plus facile à charger que la batterie principale dans la mesure où cette dernière est généralement remplie.

L'invention n'est en rien limitée par cette caractéristique. On peut par exemple prévoir d'utiliser l'énergie électrique récupérée par l'alternateur pour recharger la batterie principale.

Dans le cas où l'énergie électrique récupérée par l'alternateur est transférée vers la batterie auxiliaire, il importe de distinguer, lorsque l'alternateur produit un courant, si ce courant produit correspond ou non à une consommation de carburant dédiée à cette génération de courant.

On peut par exemple prévoir de surveiller la tension du réseau de bord. En effet, un dépassement d'une valeur seuil autorisée, par exemple une valeur mesurée de 15V coté réseau de bord pour une valeur maximale autorisée de 14,6 V, peut être le signe de ce que l'alternateur génère de l'énergie peu coûteuse en carburant.

Les moyens de charge de la batterie auxiliaire peuvent par exemple charger la batterie auxiliaire à partir du secteur, à partir d'une source d'énergie solaire, par exemple des panneaux solaires, à partir d'un thermo-générateur récupérant et convertissant en énergie électrique l'énergie thermique perdue dans les gaz d'échappement du véhicule, et/ou autre.

Il est également proposé un système d'alimentation en électricité comprenant un dispositif principal tel que décrit ci-dessus et un dispositif auxiliaire tel que décrit ci-dessus, ainsi qu'un véhicule automobile comprenant un tel système.

Il est également proposé un procédé, selon la revendication 9.

Ce procédé peut en particulier être mis en œuvre par des moyens de traitement du type microcontrôleur.

L'invention est maintenant décrite en référence aux dessins annexés, non limitatifs, dans lesquels :
- la figure 1 montre schématiquement un exemple de système d'alimentation en électricité d'un tableau de bord d'un véhicule, selon un mode de réalisation de l'invention;
- les figures 2 et 3 montrent des organigrammes d'un exemple de procédé selon un mode de réalisation de l'invention.

Des références identiques d'une figure à l'autre désignent des éléments identiques ou similaires.

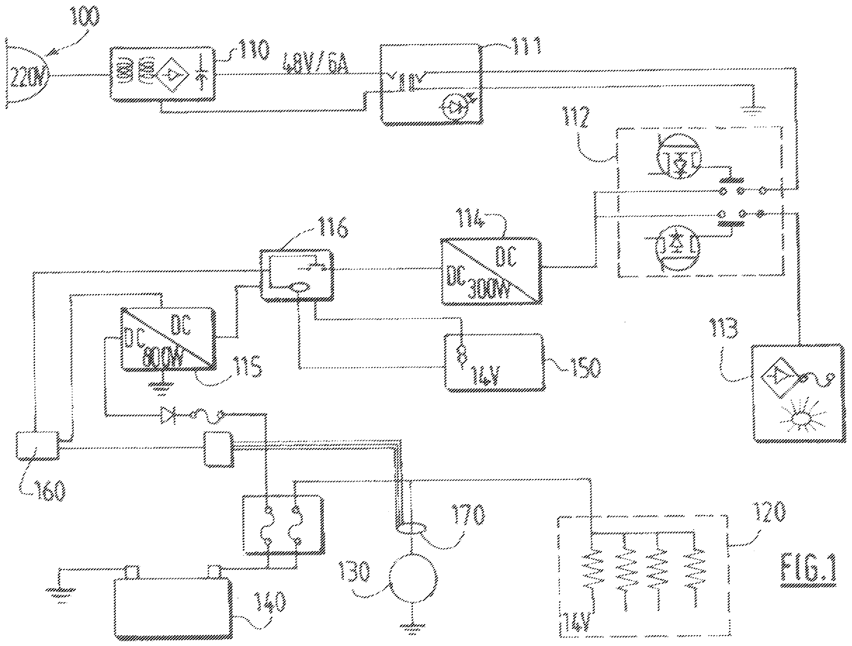

En référence à la figure 1, le système d'alimentation en électricité d'un réseau de bord 120 de véhicule représenté comprend ;
- un dispositif principal, comprenant une batterie principale 140, et un alternateur 130,
- un dispositif auxiliaire, comprenant une batterie auxiliaire 150 et des moyens 110, 111, 114, 116 de charge de cette batterie auxiliaire.

La batterie principale 140, par exemple une batterie au plomb classique, et l'alternateur 130, sont connus en soi et couramment utilisés dans l'industrie automobile.

La batterie auxiliaire peut par exemple être une batterie lithium-ion.

Les moyens de charge comprenant des moyens 110, 111, 114, 116 pour charger de l'énergie électrique à partir du secteur, ici représenté schématiquement sous la référence 100. Ces moyens comprennent un chargeur 110, une prise externe 111, un premier convertisseur 114 et un BMS 116, c'est-à-dire des appareils connus en soi.

Alternativement, plutôt qu'une prise externe, on peut prévoir un câblage spécifique pour apporter du courant à la borne positive de la batterie auxiliaire.

Bien entendu, on pourrait prévoir que certains de ces appareils ne fassent pas partie du dispositif auxiliaire à proprement parler. Par exemple, on pourrait prévoir de commercialiser des dispositifs auxiliaires avec simplement le premier convertisseur et le BMS comme moyens de charge de la batterie auxiliaire.

On peut aussi prévoir que la batterie auxiliaire puisse être retirée du véhicule relativement facilement, afin d'offrir des prestations portatives, par exemple éclairage ou autre.

Dans cet exemple, le dispositif auxiliaire est également agencé pour charger la batterie auxiliaire 150 à partir de panneaux solaires 113.

Un relais 112, commandé par des moyens de traitement 160, permet de choisir la source d'énergie à utiliser.

A la sortie du premier convertisseur 114, l'énergie est sous une forme calibrée, en vue d'une charge de la batterie auxiliaire.

Le dispositif auxiliaire comporte en outre un deuxième convertisseur 115 pour transférer de l'énergie électrique en provenance de la batterie auxiliaire 150 à travers le BMS 116 vers la batterie principale 140.

Un capteur de courant 170 en communication avec des moyens de commande, ici des moyens de traitement du type microcontrôleur 160, permet de détecter lorsque l'alternateur 130 du dispositif principal est en fonctionnement.

Le microcontrôleur 160 peut alors commander au deuxième convertisseur 115 un transfert d'énergie vers la batterie principale 140.

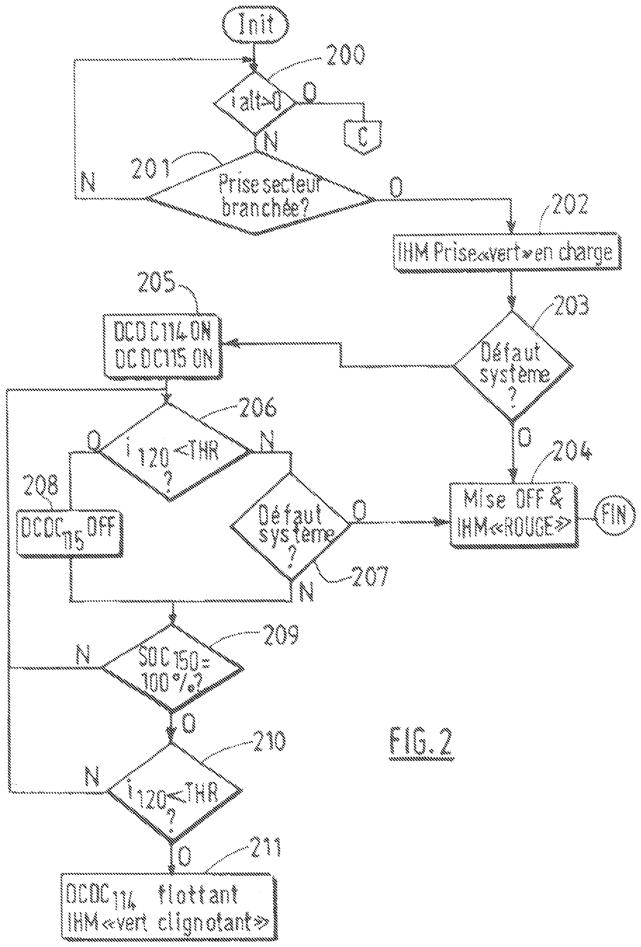

La figure 2 est un organigramme d'un exemple de procédé mis en œuvre par le microcontrôleur 160 lorsque le véhicule est arrêté, c'est-à-dire en mode veille.

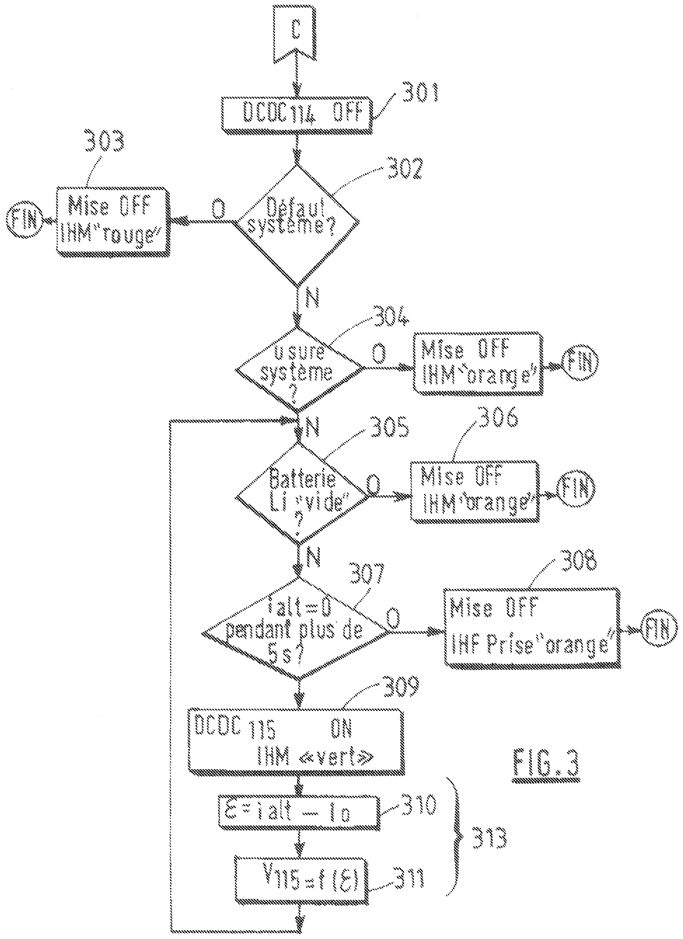

Si un utilisateur démarre le véhicule et le met en route, un test 200 quant à la valeur mesurée du courant en sortie de l'alternateur permet de détecter que le véhicule est en marche. Le microcontrôleur exécute alors les étapes de la figure 3, laquelle sera décrite plus loin.

Le microcontrôleur 160 reçoit des données quant à l'état de branchement de la prise externe 111. S'il s'avère, suite à un test 201, que cette prise est effectivement branchée sur le secteur, alors un voyant lumineux, par exemple de couleur verte, est allumé sur l'interface homme machine afin de signaler la charge de la batterie auxiliaire. A cet effet, le microcontrôleur émet un signal de sortie en ce sens, lors d'une étape 202.

Le microcontrôleur peut être dans cet état lorsque l'utilisateur du véhicule branche un chargeur 220V AC - 48V DC sur une prise extérieure standard et sur la prise externe du véhicule en stationnement. Cette prise externe, par exemple du type allume-cigare, peut être sur une partie extérieure du véhicule par exemple.

Le voyant vert s'allumant lors du dernier branchement peut par exemple être une LED (de l'anglais « light-emitting diode ») à proximité de la prise externe du véhicule.

L'organigramme de la figure 2 comporte des étapes 203, 205, de tests quant à d'éventuels défauts du dispositif auxiliaire. En cas de détection d'un disfonctionnement, un voyant lumineux rouge de l'interface homme machine est allumé suite à une étape 204, et le reste du programme n'est plus exécuté par le microcontrôleur. L'énergie du secteur n'est donc pas transférée jusqu'au véhicule, le réseau de bord étant simplement alimenté par la batterie principale.

Si aucun défaut n'est détecté lors de l'étape 203, les premier et deuxième convertisseurs, commandés par le microcontrôleur, sont allumés lors d'une étape 205. Le système commence par recharger la batterie principale du véhicule, via le deuxième convertisseur. Comme expliqué ci-dessous, en cas de vie à bord, l'énergie électrique reçue du deuxième convertisseur est répartie entre la charge de la batterie principale et des consommateurs électriques actifs.

Un test 206 quant à une valeur mesurée du courant à l'entrée du réseau de bord permet de détecter si le réseau de bord consomme de l'énergie (« vie à bord ») ou non.

S'il s'avère que le réseau de bord est actif, c'est à dire que l'on est dans une situation de véhicule à l'arrêt, avec un ou plusieurs poste(s) consommateur(s) d'électricité allumé(s), et en charge, alors le deuxième convertisseur 115 permet de recharger et d'alimenter le réseau de bord.

Le système est agencé de sorte que la batterie auxiliaire n'est chargée que s'il reste suffisamment d'énergie délivrée par le chargeur 114. Lorsque la consommation du réseau de bord tend vers 0 A, c'est-à-dire lorsque le réseau de bord est inactif et que la batterie principale est chargée, l'énergie issue du secteur est utilisée pour charger la batterie auxiliaire.

En effet, s'il s'avère à l'issue du test 206 que le réseau de bord est inactif, c'est à dire que l'on est dans une situation de véhicule à l'arrêt, sans poste consommateur d'électricité allumé, et en charge, alors le deuxième convertisseur 115 est éteint lors d'une étape 208. On peut en effet présumer que la batterie principale est suffisamment pleine, et seule la batterie auxiliaire est rechargée.

Un test 209 quant à l'état de charge de la batterie auxiliaire est effectué. Tant que la batterie auxiliaire n'est pas pleine, la recharge de cette batterie à partir du secteur se poursuit. S'il s'avère que la batterie auxiliaire est pleine, alors on procède à un test 210 quant à la présence de vie à bord.

Si ce test 210 révèle que un ou plusieurs poste(s) consommateur(s) d'électricité est(sont) allumé(s), le véhicule est à l'arrêt et branché sur le secteur, alors le premier convertisseur reste en fonctionnement. On peut en outre s'attendre à ce que le deuxième convertisseur n'ait pas été éteint, du fait de la présence de vie à bord, de sorte que le réseau de bord est alimenté en électricité via le BMS et que l'on maintient l'état de charge de la batterie auxiliaire. L'énergie électrique en provenance du secteur est ainsi répartie entre la charge de la batterie auxiliaire et les consommateurs électriques actifs.

On peut en outre prévoir d'allumer un voyant lumineux de façon intermittente, afin de signaler à l'utilisateur éventuellement présent que la batterie auxiliaire est chargée et d'inviter l'utilisateur à débrancher la prise externe.

Si le test 210 révèle que le réseau de bord est inactif, alors l'étape 208 conduit à un arrêt de fonctionnement du deuxième convertisseur.

En variante et éventuellement en complément, on peut prévoir un panneau solaire par exemple sur le toit du véhicule. Le fonctionnement global est sensiblement identique, à ceci prés que la loi de gestion du premier convertisseur est adaptée aux spécificités du panneau.

Comme expliqué ci-dessus, lorsque l'utilisateur fait fonctionner le réseau de bord sans faire tourner le moteur, le système reste en mode veille.

Une mise en marche du véhicule conduit à sortir de la boucle de la figure 2, via des étapes non représentées. Par exemple, le système surveille le courant de l'alternateur grâce au capteur de courant. Lorsque ce courant devient positif et supérieur à un seuil pendant un laps de temps déterminé, par exemple supérieur à 5 A pendant plus de 5 secondes, le système passe alors en mode actif.

En mode actif, le deuxième convertisseur et la batterie auxiliaire permettent d'injecter du courant dans le réseau de bord sans modifier la tension de ce réseau de bord, comme expliqué ci-dessous.

En mode actif, le microcontrôleur exécute les étapes de la figure 3.

Le premier convertisseur est désactivé lors d'une étape 301, de sorte qu'il est mis fin à la charge de la batterie auxiliaire.

Dans un mode de réalisation non représenté, lorsque le véhicule comporte des sources d'énergie embarquées, du type panneau solaire, on peut prévoir d'utiliser ces sources pour générer de l'électricité pendant le fonctionnement du véhicule, en roulage. L'énergie électrique générée est soit immédiatement consommée par le réseau de bord, soit stockée dans la batterie auxiliaire.

Selon une autre variante, complémentaire ou non, un thermo-générateur permet de récupérer l'énergie perdue dans les gaz d'échappement, le dispositif auxiliaire étant alors adapté pour cette source d'électricité.

Pour revenir à la figure 3, il est procédé lors d'une étape 302 à une vérification du dispositif auxiliaire. En cas de défaillance, un voyant rouge de l'interface homme machine s'allume, et le microcontrôleur est éteint lors d'une étape 303.

En outre, il est procédé lors d'une étape 304 à un test quant à l'usure de la batterie auxiliaire. Ce test 304 peut être effectué à partir de données reçues du BMS et relatives à l'état d'usure de la batterie auxiliaire. Si cette dernière n'est pas en état de fonctionner correctement, un voyant orange de l'interface homme machine s'allume, et le microcontrôleur est éteint. L'utilisateur est ainsi invité à procéder au remplacement de la batterie auxiliaire. Le réseau de bord est alors simplement alimenté par la batterie principale, laquelle est chargée par l'alternateur. Dit autrement, le véhicule reprend un mode de fonctionnement classique.

Un test 305 quant à l'état de charge de la batterie auxiliaire est effectué. Ce test 305 peut être effectué à partir de données reçues du BMS et relatives à l'état de charge de la batterie auxiliaire. S'il s'avère que la batterie auxiliaire est vide, alors le microcontrôleur est éteint et un voyant orange de l'interface homme machine est allumé afin de signaler à l'utilisateur que le réseau de bord du véhicule fonctionne dorénavant en utilisant seulement le courant issu de l'alternateur.

Ainsi, le système d'alimentation contrôle les états de charge et de santé de la batterie auxiliaire pour décider de la disponibilité de l'énergie électrique qui pourra être utilisée par le véhicule.

Le courant en sortie de l'alternateur est surveillé grâce au capteur de courant de la figure 1. Un test 307 permet de détecter une coupure éventuelle du moteur. Dans ce cas, le microcontrôleur est éteint, et un voyant orange est allumé pour inviter l'utilisateur à brancher la prise externe du véhicule sur le secteur.

Si le moteur n'est pas coupé, alors le microcontrôleur envoie des instructions pour faire fonctionner le deuxième convertisseur, et pour allumer un voyant vert de l'interface homme machine, lors d'une étape 307.

Puis le microcontrôleur commande un transfert d'énergie de la batterie auxiliaire vers la batterie principale, lors d'étapes 313.

Plus précisément, le microcontrôleur compare la valeur de courant mesurée à la sortie de l'alternateur à un seuil io, par exemple 0 A, lors d'une étape 310. Puis, est calculée lors d'une étape 311 une valeur de commande du transfert d'énergie électrique à partir de la batterie auxiliaire en fonction de la différence entre la valeur de courant mesurée et la valeur seuil.

L'étape de calcul 311 peut faire en outre intervenir une valeur de commande précédente.

La valeur de commande du transfert d'énergie peut par exemple être une valeur de tension de sortie à imposer au deuxième convertisseur.

Lors d'un transfert d'énergie ainsi commandé par le microcontrôleur, la batterie additionnelle fournit de l'énergie au deuxième convertisseur, lequel injecte l'énergie électrique dans le réseau de bord, et ce sans modifier la tension de ce réseau de bord.

Après une étape d'attente non représentée, le microcontrôleur reçoit une nouvelle valeur de courant de sortie d'alternateur lors d'une étape également non représentée. Une boucle permet d'ajuster la valeur de commande de façon à maintenir la valeur de courant mesurée en sortie d'alternateur relativement proche du seuil i₀. Une telle boucle de régulation permet ainsi d'ajuster le transfert de charge depuis la batterie auxiliaire de façon à limiter ou stopper l'alternateur, ce qui permet de réduire la consommation de carburant liée à la consommation en électricité du réseau de bord.

Le système est agencé de façon à assurer les précautions habituelles d'un système bouclé, du type filtrage, bande morte, ou autre.

Le courant mesuré en sortie d'alternateur, et avantageusement filtré, sert ainsi de paramètre de base pour piloter le deuxième convertisseur. On peut prévoir que tant que la valeur de ce courant n'est pas inférieure à une valeur seuil calibrée, le deuxième convertisseur augmente sa tension de sortie pour faire entrer du courant vers le réseau de bord. Dés que cette valeur seuil calibrée est atteinte, le microcontrôleur envoie au deuxième convertisseur des valeurs de commande de façon à obtenir une régulation autour de ce point de fonctionnement. Si la consommation du réseau de bord change au cours du temps, le microcontrôleur commande le deuxième convertisseur de façon à garder le courant en sortie de l'alternateur en dessous de la valeur seuil calibrée.

Si la consommation du réseau de bord dépasse la capacité électrique du deuxième convertisseur, l'alternateur délivre alors le complément de courant nécessaire. Le deuxième convertisseur reste sur sa limitation de courant haute. Si la consommation du réseau de bord diminue par la suite, le courant en sortie d'alternateur est de nouveau régulé autour de la valeur seuil calibrée.

On peut noter que malgré les variations dans la consommation du réseau de bord, la tension de ce réseau de bord reste sensiblement constante, les perturbations restant relativement faibles, par exemple au-dessous de 0,2 V pour un réseau de bord fonctionnant à 14V.

Lors d'un transfert d'énergie, l'énergie transformée par le deuxième convertisseur est injectée dans le réseau de bord en ajoutant à la tension mesurée sur ce réseau, par exemple 14,3 V, un incrément borné, par exemple 0,5 V au maximum, permettant d'atteindre la valeur de courant souhaitée, par exemple 8 A.

Si, en particulier lors de la mise en marche du véhicule, la valeur de courant mesurée à la sortie de l'alternateur est nulle, et la valeur de commande précédente correspond à une non commande de transfert d'énergie, alors la valeur calculée à l'étape 311 peut être telle que le microcontrôleur continue à s'abstenir de commander un transfert d'énergie de la batterie auxiliaire vers la batterie principale. En effet, lorsqu'il est inutile de convertir de l'énergie mécanique en électricité, le courant en sortie d'alternateur a une valeur nulle, et il n'y a pas lieu d'utiliser l'énergie stockée dans la batterie principale.

Néanmoins, une valeur nulle du courant d'alternateur peut également être atteinte lorsque le système est régulé. Aussi, pour une valeur de courant mesurée sensiblement nulle et une valeur de commande précédente correspondant à une tension suffisamment élevée pour transférer l'énergie de la batterie auxiliaire vers la batterie principale, l'étape de calcul 311 peut conduire à une valeur de commande sensiblement égale à la précédente.

En variante, on pourrait prévoir à la place des étapes 310 et 311, une étape de comparaison à un seuil et une étape d'incrémentation ou de décrémentation de la tension de sortie à imposer au deuxième convertisseur, selon le résultat de la comparaison. Cette variante est avantageuse en ce sens que le procédé et son implémentation sont relativement simples.

A chaque passage de boucle, le test 307 est effectué, de sorte qu'une coupure du moteur conduit à une sortie de boucle.

Egalement, lorsque la batterie auxiliaire est vidée, le test 305 permet de sortir de la boucle. Ainsi, lorsque l'énergie contenue dans la batterie auxiliaire passe sous une limite basse prédéterminée, le microcontrôleur est éteint, ou alternativement passe en mode veille. Lorsque l'utilisateur branche la prise externe sur le secteur, le microcontrôleur est activé.

Ce système peut permettre de réaliser des économies de carburant. A titre d'exemple, une batterie 12V de 110 A.h peut contenir environ 1kW.h utile. L'utilisation de cette batterie peut entraîner un gain d'un litre de carburant environ. Si la consommation de ce kW.h correspond à un trajet de 200 km, alors le gain peut s'exprimer par une réduction de 0,5 1 de carburant pour 100 km. Si la consommation de ce kW.h correspond à un trajet de 1000 km, alors le gain peut s'exprimer par une réduction de 0,1 1 de carburant pour 100 km. Bien entendu, ce gain ne peut être obtenu que si la batterie est rechargée avant le trajet.

Il est donc avantageux d'inciter l'utilisateur à brancher son véhicule sur le secteur lorsque la voiture est garée, en particulier le soir.

Une interface homme machine relativement simple peut être réalisée, cette interface homme machine comprenant un voyant de type LED visible depuis le poste de conduite. La LED allumée en vert indique que le système fonctionne et permet d'économiser du carburant. Lorsque la batterie auxiliaire est vide, la LED passe à l'orange pour inciter l'utilisateur à recharger le système lors de la prochaine phase de parking prolongé.

Les variantes décrites ci-dessus, impliquant un panneau solaire ou un thermo-générateur, fonctionnent sur le même principe, à ceci prés que la disponibilité d'énergie lorsque le véhicule est en marche augmente la capacité du système. Dans ce cas, une LED non allumée peut indiquer une défaillance du système.

## Revendications

1. Dispositif auxiliaire d'alimentation en électricité d'un réseau de bord (120) de véhicule, destiné à fonctionner avec un dispositif principal d'alimentation en électricité dudit réseau de bord, ledit dispositif principal comprenant une batterie principale (140) et un alternateur (130) pour charger ladite batterie principale (140), le dispositif auxiliaire comprenant :
- des moyens de stockage auxiliaires (150),
- des moyens de détection (170) du fonctionnement de l'alternateur,
- des moyens de charge (110, 111, 114, 116) des moyens de stockage auxiliaires à partir d'une source auxiliaire (100, 113) distincte de l'alternateur,
ledit dispositif auxiliaire étant **caractérisé en ce qu'**il comprend en outre :
- un convertisseur (115) pour adapter l'énergie électrique reçue des moyens de stockage auxiliaires (150) aux caractéristiques du réseau de bord (120) lors d'un transfert d'énergie électrique entre lesdits moyens de stockage auxiliaires et ledit réseau de bord, et
- des moyens de commande (160) en communication avec le moyen de détection pour commander au convertisseur (115), suite à la détection du fonctionnement de l'alternateur, un transfert d'énergie depuis lesdits moyens de stockage auxiliaires vers la batterie principale (140).

2. Dispositif auxiliaire selon la revendication 1, dans lequel les moyens de détection du fonctionnement de l'alternateur comprennent un capteur de courant (170) pour mesurer une valeur de courant en sortie de l'alternateur (130).

3. Dispositif auxiliaire selon la revendication 2, ledit dispositif auxiliaire étant agencé pour asservir une valeur de commande du transfert d'énergie électrique à partir des moyens de stockage auxiliaires, en fonction de l'écart entre une valeur de courant mesurée reçue du capteur de courant et une valeur de consigne, et ce selon une boucle de régulation.

4. Dispositif auxiliaire selon l'une des revendications 1 à 3, ledit dispositif auxiliaire étant agencé de façon à charger les moyens de stockage auxiliaires (150) à partir de l'alternateur (130), notamment suite à une détection de ce qu'une tension du réseau de bord (120) est supérieure à une valeur autorisée.

5. Dispositif auxiliaire selon l'une des revendications 1 à 4, dans lequel les moyens de charge (110, 111, 114, 116) des moyens de stockage auxiliaires (150) sont agencés pour charger les moyens de stockage auxiliaires à partir d'une source d'énergie solaire (113).

6. Dispositif auxiliaire selon l'une des revendications 1 à 5, dans lequel les moyens de charge (110, 111, 114, 116) des moyens de stockage auxiliaires (150) sont agencés pour charger les moyens de stockage auxiliaires à partir du secteur (100).

7. Système d'alimentation en électricité d'un réseau de bord de véhicule, comprenant
un dispositif auxiliaire selon l'une des revendications 1 à 6, et
le dispositif principal d'alimentation en électricité dudit réseau de bord.

8. Véhicule automobile comprenant un système d'alimentation en électricité selon la revendication 7.

9. Procédé d'alimentation en électricité d'un réseau de bord de véhicule, ledit véhicule comprenant un dispositif principal d'alimentation en électricité dudit réseau de bord, ledit dispositif principal comprenant une batterie principale (140), un alternateur pour charger ladite batterie principale, et un convertisseur (115) pour adapter l'énergie électrique reçue de moyens de stockage auxiliaires (150) aux caractéristiques du réseau de bord (120) lors d'un transfert d'énergie électrique entre lesdits moyens de stockage auxiliaires et ledit réseau de bord, le procédé comprenant
une étape de commande (205) de chargement des moyens de stockage auxiliaires à partir d'une source auxiliaire distincte de l'alternateur,
une étape de réception (307) d'un signal indiquant une détection du fonctionnement de l'alternateur,
ledit procédé étant **caractérisé en ce qu'**il comprend, suite à ladite étape de réception, une étape de commande (311) au convertisseur (115) d'un transfert d'énergie depuis lesdits moyens de stockage auxiliaires vers la batterie principale (140).

## Patentansprüche

1. Hilfsvorrichtung zur Stromversorgung eines Bordnetzes (120) eines Fahrzeugs, welche für einen Betrieb mit einer Hauptvorrichtung zur Stromversorgung des Bordnetzes bestimmt ist, wobei die Hauptvorrichtung eine Hauptbatterie (140) und einen Wechselstromgenerator (130) zum Laden der Hauptbatterie umfasst (140), wobei die Hilfsvorrichtung umfasst:
- Hilfsspeichermittel (150),
- Mittel zur Detektion (170) des Betriebs des Wechselstromgenerators,
- Mittel zum Laden (110, 111, 114, 116) der Hilfsspeichermittel aus einer Hilfsquelle (100, 113), die von dem Wechselstromgenerator verschieden ist,
wobei die Hilfsvorrichtung **dadurch gekennzeichnet ist, dass** sie außerdem umfasst:
- einen Wandler (115) zum Anpassen der von den Hilfsspeichermitteln (150) empfangenen elektrischen Energie an die Eigenschaften des Bordnetzes (120) bei einer Übertragung von elektrischer Energie zwischen den Hilfsspeichermitteln und dem Bordnetz, und
- Steuerungsmittel (160), die mit den Mitteln zur Detektion in Kommunikation stehen, um am Wandler (115), im Anschluss an die Detektion des Betriebs des Wechselstromgenerators, eine Übertragung von Energie von den Hilfsspeichermitteln zur Hauptbatterie (140) zu steuern.

2. Hilfsvorrichtung nach Anspruch 1, wobei die Mittel zur Detektion des Betriebs des Wechselstromgenerators einen Stromsensor (170) zum Messen eines Stromwertes am Ausgang des Wechselstromgenerators (130) umfassen.

3. Hilfsvorrichtung nach Anspruch 2, wobei die Hilfsvorrichtung dafür ausgelegt ist, einen Steuerwert der Übertragung von elektrischer Energie aus den Hilfsspeichermitteln in Abhängigkeit von der Abweichung zwischen einem gemessenen Stromwert, der von dem Stromsensor empfangen wird, und einem Sollwert zu regeln, und zwar in einer Regelschleife.

4. Hilfsvorrichtung nach einem der Ansprüche 1 bis 3, wobei die Hilfsvorrichtung dafür ausgelegt ist, die Hilfsspeichermittel (150) mittels des Wechselstromgenerators (130) zu laden, insbesondere im Anschluss an eine Detektion, dass eine Spannung des Bordnetzes (120) höher als ein zulässiger Wert ist.

5. Hilfsvorrichtung nach einem der Ansprüche 1 bis 4, wobei die Mittel zum Laden (110, 111, 114, 116) der Hilfsspeichermittel (150) dafür ausgelegt sind, die Hilfsspeichermittel aus einer Solarenergiequelle (113) zu laden.

6. Hilfsvorrichtung nach einem der Ansprüche 1 bis 5, wobei die Mittel zum Laden (110, 111, 114, 116) der Hilfsspeichermittel (150) dafür ausgelegt sind, die Hilfsspeichermittel aus dem Netz (100) zu laden.

7. System zur Stromversorgung eines Bordnetzes eines Fahrzeugs, welches umfasst:
eine Hilfsvorrichtung nach einem der Ansprüche 1 bis 6, und
die Hauptvorrichtung zur Stromversorgung des Bordnetzes.

8. Kraftfahrzeug, welches ein System zur Stromversorgung nach Anspruch 7 umfasst.

9. Verfahren zur Stromversorgung eines Bordnetzes eines Fahrzeugs, wobei das Fahrzeug eine Hauptvorrichtung zur Stromversorgung des Bordnetzes umfasst, wobei die Hauptvorrichtung eine Hauptbatterie (140), einen Wechselstromgenerator zum Laden der Hauptbatterie und einen Wandler (115) zum Anpassen der von den Hilfsspeichermitteln (150) empfangenen elektrischen Energie an die Eigenschaften des Bordnetzes (120) bei einer Übertragung von elektrischer Energie zwischen den Hilfsspeichermitteln und dem Bordnetz umfasst, wobei das Verfahren umfasst:
einen Schritt der Steuerung (205) des Ladens der Hilfsspeichermittel aus einer Hilfsquelle, die von dem Wechselstromgenerator verschieden ist,
einen Schritt des Empfangs (307) eines Signals, das eine Detektion des Betriebs des Wechselstromgenerators anzeigt,
wobei das Verfahren **dadurch gekennzeichnet ist, dass** es im Anschluss an den Schritt des Empfangs einen Schritt der Steuerung (311), am Wandler (115), einer Übertragung von Energie von den Hilfsspeichermitteln zur Hauptbatterie (140) umfasst.

## Claims

1. Auxiliary device for supplying electricity to a vehicle onboard network (120), said device being intended to operate together with a main device for supplying electricity to said onboard network, said main device comprising a main battery (140) and an alternator (130) for charging said main battery (140), the auxiliary device comprising:
- auxiliary storage means (150),
- means (170) for detecting the operation of the alternator,
- means (110, 111, 114, 116) for charging the auxiliary storage means from an auxiliary source (100, 113) distinct from the alternator,
said auxiliary device being **characterized in that** it further comprises:
- a converter (115) for adapting the electrical power received from the auxiliary storage means (150) to the characteristics of the onboard network (120) when electrical power is transferred between said auxiliary storage means and said onboard network, and
- control means (160) that communicate with the detection means in order, after the operation of the alternator has been detected, to control the converter (115) so that it transfers power from said auxiliary storage means to the main battery (140).

2. Auxiliary device according to Claim 1, wherein the means for detecting the operation of the alternator comprise a current sensor (170) for measuring a current value at the output of the alternator (130).

3. Auxiliary device according to Claim 2, said auxiliary device being designed to exercise feedback control over a control value for the transfer of electrical power from the auxiliary storage means on the basis of the difference between a measured current value received from the current sensor and a setpoint value, in accordance with a control loop.

4. Auxiliary device according to one of Claims 1 to 3, said auxiliary device being designed to charge the auxiliary storage means (150) from the alternator (130), in particular after it is detected that a voltage of the onboard network (120) is higher than a permitted value.

5. Auxiliary device according to one of Claims 1 to 4, wherein the means (110, 111, 114, 116) for charging the auxiliary storage means (150) are designed to charge the auxiliary storage means from a solar power source (113).

6. Auxiliary device according to one of Claims 1 to 5, wherein the means (110, 111, 114, 116) for charging the auxiliary storage means (150) are designed to charge the auxiliary storage means from the mains (100).

7. System for supplying electricity to a vehicle onboard network, comprising
an auxiliary device according to one of Claims 1 to 6, and
the main device for supplying electricity to said onboard network.

8. Automotive vehicle comprising an electricity supply system according to Claim 7.

9. Method for supplying electricity to a vehicle onboard network, said vehicle comprising a main device for supplying electricity to said onboard network, said main device comprising a main battery (140), an alternator for charging said main battery and a converter (115) for adapting the electrical power received from auxiliary storage means (150) to the characteristics of the onboard network (120) when electrical power is transferred between said auxiliary storage means and said onboard network, the method comprising
a step (205) of controlling the charging of the auxiliary storage means from an auxiliary source distinct from the alternator,
a step (307) of receiving a signal indicating detection of the operation of the alternator,
said method being **characterized in that** it comprises, after said receiving step, a step (311) of controlling the converter (115) so that it transfers power from said auxiliary storage means to the main battery (140).
